# EUROPEAN PATENT APPLICATION

(11) **EP 4 745 498 A1**
(43) Date of publication of application: **20.05.2026**
(21) Application number: 24889013.9
(22) Date of filing: 29.10.2024
(51) Int. Cl.: F25D 23/02, F25D 23/04, F25D 23/06, F25D 27/00, F25D 25/02, F21V 33/00, G02B 6/00

(54) **REFRIGERATOR**

(30) Priority: 08.11.2023 KR 20230153588
(71) Applicant: LG Electronics Inc., Yeongdeungpo-gu Seoul 07336 (KR)
(72) Inventor: KIM, Jaewoong, Seoul 08592 (KR); LIM, Ki Young, Seoul 08592 (KR); KIM, Hoon, Seoul 08592 (KR); KIM, Gyeongho, Seoul 08592 (KR)
(74) Representative: Schornack, Oliver
(86) International application number: PCT/KR2024/016635
(87) International publication number: WO 2025/100825

(57) **Abstract**

In a refrigerator according to the present invention, a door hanging part which fixes a basket assembly to a door also includes a light source for emitting light at the basket assembly, so that the basket assembly can be fixed and, simultaneously, at least a portion of the basket assembly can be illuminated, and thus the effects of simultaneously fixing and illuminating the basket assembly can be achieved with one structure rather than separate structures.

## Description

### Technical Field

The present invention relates to a refrigerator.

### Background Art

A refrigerator is a home appliance for supplying cold air generated using circulation of refrigerant to a storage compartment to keep various types of storage objects fresh for a long time.

Meanwhile, user demand has been increasing for improvement in exteriors of refrigerators and for reflecting various user preferences.

In particular, since a door, which forms the front of a refrigerator, determines the exterior of the refrigerator, door designs with various materials, colors, design patterns, and the like can meet the user demand.

Meanwhile, it is generally difficult to check the type of food items stored in a refrigerator or its storage conditions without opening the door.

This increases the number and duration of times users open the door to check the type and condition of food, potentially leading to unnecessary cold-air leakage from a storage compartment.

Accordingly, designing a portion of the door to be translucent or transparent allows users to check the type and condition of food stored in the storage compartment without opening the door.

However, even when the condition inside the storage compartment can be checked without opening the door in this way, it can be difficult to check the condition of the storage compartment in dark environments.

In addition, when the condition inside the storage compartment can be checked without opening the door, there may be a situation in which the user can see inside even when not using the refrigerator, and thus the design of the interior of the storage compartment or the interior of the door may need to be improved.

### Disclosure

### Technical Problem

The present invention is directed to providing a refrigerator capable of achieving fixing and lighting effects of a basket assembly using a single structure.

In addition, the present invention is directed to providing a refrigerator capable of preventing foaming performance leakage in an area in which a hanging part for fixing a basket assembly is disposed and preventing changes in the amount or direction of lighting of the basket assembly.

In addition, the present invention is directed to providing a refrigerator capable of facilitating the repair or replacement of a light source mounted within a hanging part for fixing a basket assembly.

In addition, the present invention is directed to providing a refrigerator capable of facilitating the cleaning and storage of a basket assembly for storing food.

In addition, the present invention is directed to providing a refrigerator capable of preventing changes in the amount or direction of lighting of a basket assembly regardless of whether some structures constituting the basket assembly are removed.

In addition, the present invention is directed to providing a refrigerator capable of providing a lighting effect along lower side edges of a basket assembly.

In addition, the present invention is directed to providing a refrigerator capable of achieving more uniform and brighter lighting along lower side edges of a basket assembly.

In addition, the present invention is directed to providing a refrigerator capable of achieving a lighting effect on all surfaces of a basket assembly as perceived by a user when a sub door and a main door are opened.

In addition, the present invention is directed to providing a refrigerator capable of achieving a lighting effect of a basket assembly even in a closed state of a door depending on whether a light source is turned on or off.

In addition, the present invention is directed to providing a refrigerator capable of achieving outstanding decorative effects through lighting in various ways under various situations.

Objects of the present invention are not limited to the above-described object, and other objects and advantages of the present invention which are not mentioned can be understood by the following description and more clearly understood by embodiments of the present disclosure. In addition, it will be easily seen that the objects and advantages of the present invention may be achieved by devices and combinations thereof that are described in the claims.

### Technical Solution

According to one embodiment of the present invention, there is provided a refrigerator including a cabinet including one or more storage compartments, a door configured to open and close the storage compartment, and a basket assembly mounted on the door, wherein the door includes a light source configured to emit light onto the basket assembly and one or more hanging parts configured to fix the basket assembly.

The hanging parts may be provided as a pair which are provided to protrude toward both side surfaces of the basket assembly and support lower portions of the both side surfaces of the basket assembly.

The hanging parts may be integrally formed with the door.

The hanging parts may be detachably attached to the door.

The door may include a main door having an opening therein and rotatably connected to the cabinet, and a sub door rotatably connected to the main door to open and close the opening of the main door, and the basket assembly may be mounted on the main door.

The main door may include a door liner including the opening and an outer plate surrounding at least one side surface of the door liner, and the hanging parts may be formed on inner side surfaces of the door liner.

The hanging parts may be integrally formed with the door liner and may protrude from the inner side surfaces of the door liner toward the opening.

An embedded portion may be formed on the inner side surface of the door liner, and at least a portion of the hanging part may be fixedly inserted into the embedded portion.

The light source may be mounted inside the hanging part, and the light source may be disposed to emit light toward side surfaces of the basket assembly.

A plurality of light sources may be mounted inside the hanging part, and each of the light sources may be disposed to emit light toward front, rear, and side surfaces of the basket assembly.

An inner or outer surface of the hanging part, which does not overlap a light-emitting area of the light source, may be light-shielded to block light emission.

The basket assembly may include a seating portion recessed to be seated on the hanging part, and the light source may be disposed to horizontally overlap a lower surface of the basket assembly.

The basket assembly may include a support member including a seating portion recessed to be seated on the hanging part, and a basket part disposed on the support member and including a recess recessed to be seated on the seating portion, and the light source may be disposed to horizontally overlap the support member.

The support member may be a light guide member configured to guide light incident from the light source to a side edge of the support member.

The support member may include a support body portion configured to support a lower surface of the basket part, and light incident on the support member may be totally reflected by upper and lower surfaces of the support body portion and diffusely reflected by side edges of the support body portion.

The light incident on the support member is not emitted toward the upper and lower surfaces of the support body portion, but may be emitted along the side edges of the support body portion.

A surface roughness, a diffusion tape, or a coating liquid may be applied along the side edges of the support body portion.

The basket part may be detachable from the support member.

The refrigerator may further include a detector including one or more of a proximity detector configured to sense a user's proximity by measuring a distance from the user, a knock detector configured to sense the user's door knocking manipulation, and an illuminance detector configured to sense the user's proximity through changes in illuminance, wherein a front surface of the door may have a structure capable of selectively viewing the inside of the storage compartment, and the light source may be turned on or off in response to a signal from the detector in a closed state of the door, thereby allowing the inside of the storage compartment to be selectively viewed through the front surface of the door.

The refrigerator may further include a lighting unit provided in the storage compartment or on the door, and
a controller configured to control the on/off of the light source and the lighting unit, wherein the controller may control the on/off of the light source and the lighting unit individually or in an interlinked manner in response to a signal from the detector.

The refrigerator may further include a lighting unit provided in the storage compartment or on the door, a controller configured to control the on/off of the light source and the lighting unit, and a communication unit configured to communicate with a remote device, wherein the controller may control the on/off of the light source and the lighting unit individually or in an interlinked manner in response to a control signal of the remote device.

### Advantageous Effects

In the refrigerator according to the present invention, the hanging part of the door, which fixes the basket assembly to the door, also includes the light source for emitting light to the basket assembly, thereby fixing the basket assembly and enabling at least a portion of the basket assembly to emit light.

Accordingly, the fixing and lighting effects of the basket assembly can be achieved simultaneously with a single structure rather than separate structures.

In addition, in the refrigerator according to the present invention, the hanging part can be integrally formed with the door, thereby preventing foaming performance leakage in the area in which the hanging part is disposed and maintaining the position of the light source mounted within the hanging part by the foam material.

Accordingly, it is possible to prevent changes in the amount or direction of lighting of the basket assembly, which may vary depending on unintended changes in the position of the light source.

In addition, in the refrigerator according to the present invention, the hanging part can be detachably attached to the door, thereby enabling quick and easy repair or replacement of the light source even in the event of a defect in the light source mounted within the hanging part.

In addition, since the basket assembly of the refrigerator according to the present invention has a removable structure including a support member, which is seated on the hanging part and receives light emitted by the light source, and a basket part detachable from the support member, it is possible to achieve easy cleaning or food storage by removing only the basket part.

Accordingly, the support member and the basket part can be formed of different materials. Accordingly, the support member can be formed of a material advantageous for light diffusion and emission, and the basket part can be formed of a material advantageous for food storage and damage prevention.

In addition, since the positions of the light source and the support member can be maintained consistently regardless of whether the basket part is detached or attached, it is possible to prevent changes in the amount or direction of lighting of the basket assembly, which can vary depending on unintended changes in the position of the light source.

In addition, in the refrigerator according to the present invention, since the support member supporting the lower portion of the basket assembly guides light incident from the light source to the side edges of the support member, it is possible to achieve the lighting effect along the side edges of the lower portion of the basket assembly, thereby achieving outstanding decorative effects and design differentiation.

In addition, in the refrigerator according to the present invention, the light incident on the support member can be emitted not toward the upper and lower surfaces of the support member, but along the side edges of the support member to allow the limited amount of light from the light source to be concentrated where lighting is needed rather than scattered to the areas in which lighting is not needed, thereby achieving a more uniform and bright lighting effect along the side edges of the support member.

In addition, the door of the refrigerator according to the present invention includes the main door having an opening therein and rotatable from the cabinet, and the sub door that opens and closes the opening of the main door and is rotatable from the main door, and the basket assembly is mounted on the main door, and thus the user can perceive the front and rear surfaces of the basket assembly when the sub door and the main door are opened.

Accordingly, the basket assembly, which achieves the lighting effect along the side edges of the support member, may achieve the lighting effect on all surfaces perceptible to the user when the sub door and the main door are opened, thereby exerting a design effect through consistent lighting of the basket assembly.

In addition, the refrigerator according to the present invention may be configured to allow the interior of the storage compartment to be viewed through the front surface of the door and may include various types of sensing devices and the light source turned on or off in response to signals from the sensing devices, and thus even in a closed state of the door, the lighting effect of the basket assembly can be achieved based on the on/off of the light source, thereby providing an excellent decoration effect without unnecessary cold-air leakage.

In addition, the refrigerator according to the present invention includes a lighting unit within the storage compartment or on the door, and the control unit may control the on/off of the light source and lighting unit individually or in an interlinked manner in response to signals from the sensing device or remote device, thereby providing an excellent decoration effect in various ways in various situations.

Specific effects together with the above-described effects are described together with a description of the following detailed matters for carrying out the disclosure.

### Brief Description of Drawings

FIGS. 1 and 2 are front views of a refrigerator with a door closed, with a front of the door invisible and the front of the door visible.
FIG. 3 is a front view of the refrigerator with a sub door open.
FIG. 4 is a front view of the refrigerator with a main door open.
FIG. 5 is an exploded perspective view of a basket assembly according to one embodiment.
FIG. 6 is a perspective view of a combined basket assembly according to one embodiment.
FIG. 7 is a view illustrating a hanging part formed on a door.
FIGS. 8 to 10 illustrate other hang parts according to various embodiments.
FIG. 11 is a view illustrating a support member being seated on the hanging part.
FIG. 12 is a cross-sectional view of the support member seated on the hanging part in FIG. 11.
FIG. 13 is a view illustrating a basket member being seated on the support member.
FIG. 14 is a view illustrating a wire being connected to the hanging part according to one embodiment.
FIG. 15 is a view illustrating a wire being connected to a hanging part according to another embodiment.
FIG. 16 is a cross-sectional view illustrating the hanging part according to one embodiment mounted on a door liner in FIG. 15.
FIG. 17 is a cross-sectional view of the hanging part according to one embodiment in FIG. 16.
FIG. 18 is a cross-sectional view illustrating the hanging part according to another embodiment mounted on the door liner in FIG. 15.
FIG. 19 is a cross-sectional view of embedded parts in FIG. 18.
FIG. 20 is a cross-sectional view of the hanging part according to another embodiment in FIG. 18.
FIG. 21 is a block diagram illustrating a flow of control signals in a refrigerator.
FIG. 22 is a view illustrating a screen implemented in a remote device or display unit.
FIG. 23 is a front view of a refrigerator according to another embodiment with one sub door open.
FIG. 24 is a front view of the refrigerator according to another embodiment with one main door open.
FIG. 25 is a side cross-sectional view of a basket assembly, shelf, and storage unit mounted inside a first door and a first storage compartment according to another embodiment.
FIG. 26 is an exploded perspective view of a second door according to another embodiment including a dispenser.
FIG. 27 is a view illustrating a screen implemented in a remote device or display unit according to another embodiment.
FIG. 28 is a flowchart illustrating a scenario for controlling the lighting of various types of lighting units according to one embodiment.

### Mode for Invention

The above-described objects, features, and advantages will be described below in detail with reference to the accompanying drawings, and thus those skilled in the art to which the present disclosure pertains will be able to easily carry out the technical spirit of the present disclosure. In describing the present invention, when it is determined that a detailed description of the known technology related to the present invention may unnecessarily obscure the gist of the present invention, a detailed description thereof will be omitted. Hereinafter, exemplary embodiments according to the present invention will be described in detail with reference to the accompanying drawings. In the drawings, the same reference numerals are used to denote the same or similar components.

Although "first," "second," and the like are used to describe various components, these components are not limited by these terms. These terms are used only to distinguish one component from another, and unless otherwise stated, it is obvious that a first component may be a second component.

Throughout the specification, unless otherwise stated, each component may be singular or plural.

Hereinafter, the arrangement of an arbitrary component on an "upper portion (or lower portion)" of a component or "above (or under)" the component may not only mean that the arbitrary component is disposed in contact with an upper surface (or a lower surface) of the component, but also mean that other components may be interposed between the component and the arbitrary component disposed above (or under) the component.

In addition, when a first component is described as being "connected," "coupled," or "joined" to a second component, the components may be directly connected or joined, but it should be understood that a third component may be "interposed" between the components, or the components may be "connected," "coupled," or "joined" through the third component.

The singular expression used herein includes the plural expression unless the context clearly dictates otherwise. In the application, terms such as "composed of" or "comprising" should not be construed as necessarily including all of the various components or operations described in the specification and should be construed as not including some of the components or some of the operations or further including additional components or operations.

Throughout the specification, when "A and/or B" is described, this means A, B, or A and B unless otherwise specified, and when "C to D" is described, this means C or more and D or less unless otherwise specified.

Hereinafter, a refrigerator according to some embodiments of the present invention will be described.

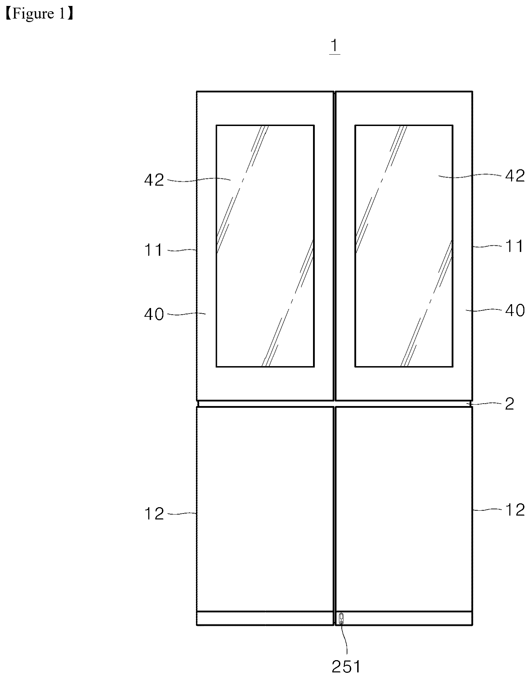

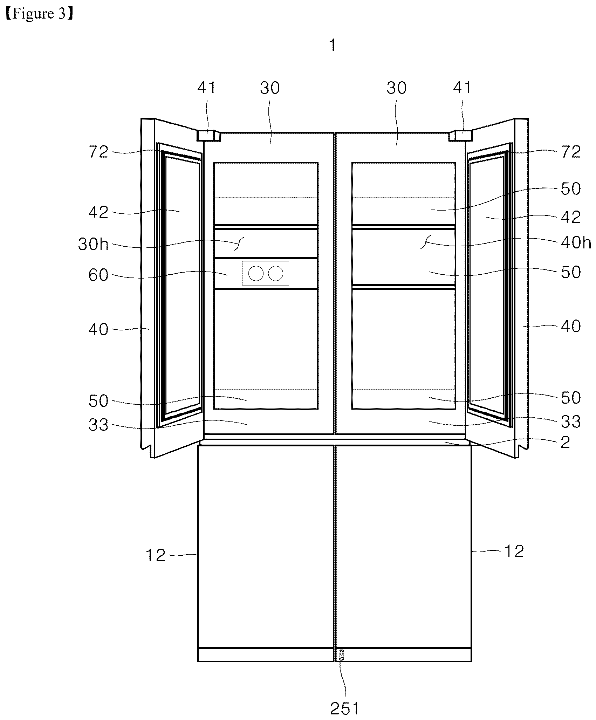

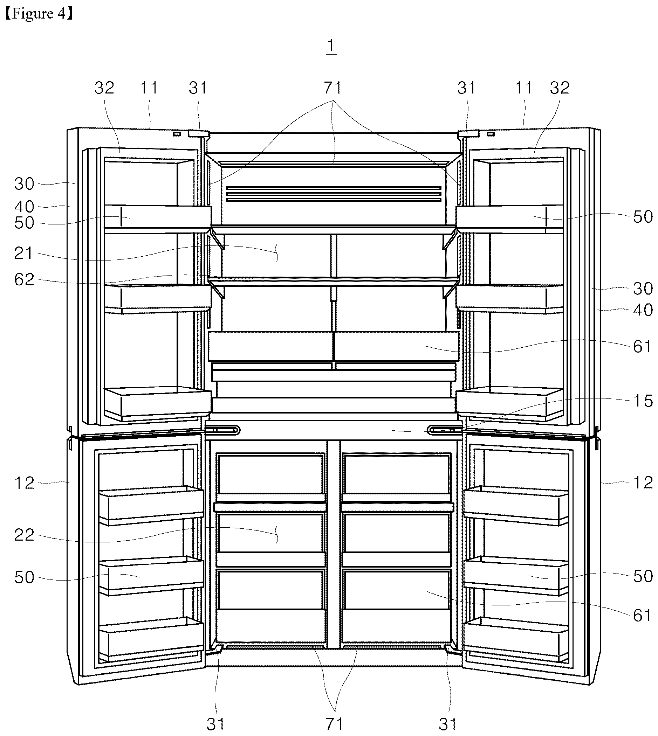

First, a refrigerator according to one embodiment of the present invention and connection relationships between major components will be described with reference to FIGS. 1 to 4.

A refrigerator 1 may have an exterior formed by a cabinet 2 including one or more storage compartments, which serve as product storage spaces, and one or more doors 11 and 12 that may open and close an open front surface of the cabinet 2.

The cabinet 2 may include an outer case forming an outer surface of the refrigerator 1 and an inner case forming an inner surface thereof, and the interior of the inner case may be divided into one or more storage spaces.

The cabinet 2 may include one or more storage compartments, and for example, the cabinet may include a first storage compartment 21 and a second storage compartment 22 that are divided by a barrier 15 and disposed vertically.

For example, the first storage compartment 21 located at the top may be a refrigerator compartment, and the second storage compartment 22 located at the bottom may be a freezer compartment.

However, the locations of the first storage compartment 21 and the second storage compartment 22 are not limited thereto, and in other embodiments, the locations of the first storage compartment 21 and the second storage compartment 22 may be swapped and disposed parallel to each other in a left-right direction.

The first storage compartment 21 and the second storage compartment 22 may each be provided with one or more storage units 61 and shelfs 62 for storing food.

The first storage compartment 21 and the second storage compartment 22 may each be provided with one or more interior lighting units 71 for illuminating the interior.

For example, the interior lighting units 71 may be disposed at any locations, such as on upper, lower, or side surfaces of each storage compartment.

A first door 11 may pivotally open and close an open front surface of the first storage compartment 21, and a second door 12 may pivotally open and close an open front surface of the second storage compartment 22.

The first door 11 and the second door 12 may be provided as a pair on left and right sides, respectively, to shield the first storage compartment 21 and the second storage compartment 22.

However, the present invention is not limited thereto, and the first door 11 or the second door 12 may be provided in a pull-in and pull-out manner rather than a rotational manner, and only one door may be provided to open and close each storage compartment.

The first door 11 and the second door 12 may be provided with one or more basket assemblies 50, and the basket assemblies 50 may be configured so as not to interfere with the storage units 61 provided within the storage compartments in a closed state of the first door 11 and the second door 12.

Meanwhile, at least one of the pair of first doors 11 may be configured as a double-door type that may be opened and closed in two directions.

For example, the first door 11 of the double-door type may include a main door 30 for opening and closing the first storage compartment 21, and a sub door 40 that is rotatably disposed on a front surface of the main door 30 and opens and closes the front surface of the main door 30.

The main door 30 may be rotatably mounted to the cabinet 2 by a main hinge 31 and may open and close a portion of the first storage compartment 21.

The main door 30 may include an opening 30h formed to pass through the main door 30 in the front-rear direction.

The main door 30 may have the overall exterior formed by an outer plate 33, a door liner 32 coupled to a rear surface of the outer plate 33, and an upper cap deco 35 and a lower cap deco 36 that respectively finish upper and lower ends of the outer plate 33 and the door liner 32.

The outer plate 33 may be formed of a plate-shaped stainless steel material and may be bent to form portions of a front surface and perimetric surface of the main door 30.

The outer plate 33 may be formed such that an area corresponding to the opening 30h is open.

The door liner 32 may be formed by injection-molding a plastic material and may form a rear surface of the main door 30.

The door liner 32 may also be formed such that an area corresponding to the opening 30h is open.

A user may view the interior of the storage compartment, or take out or store food items, through the opening 30h of the main door 30 formed in this way.

One or more basket assemblies 50 may be mounted on the rear surface of the main door 30.

For example, the basket assembly 50 may be disposed inside the door liner 32 in a left-right direction of the door liner 32.

Accordingly, the basket assembly 50 may be exposed to the outside through the opening 30h of the main door 30.

The user may access the basket assembly 50 through the opening 30h without opening the main door 30.

The opening 30h may be formed to occupy most of the front surface of the main door 30, excluding a portion of the perimeter of the main door 30.

One or more display units 60 may be provided on the main door 30.

The display unit 60 displays and operates an operating state of the refrigerator 1 and allows the user to identify various external information through the sub door 40.

The display unit 60 may be provided with a display screen for displaying state information of the refrigerator 1 and various operation buttons for setting the operation of the refrigerator 1.

The display unit 60 may be disposed to overlap the basket assembly 50 in a front-rear direction of the main door 30.

The sub door 40 may be rotatably mounted to the main door 30 by a sub hinge 41 and may open and close the opening 30h formed in the front surface of the main door 30.

A front surface of the sub door 40 may include a transmissive part 42.

The transmissive part 42 of the sub door 40 may be disposed to overlap the opening 30h of the main door 30 in the front-rear direction and formed to have a shape and size corresponding to the opening 30h of the main door 30.

Accordingly, the user may view the interior of the first storage compartment 21 through the transmissive part 42 of the sub door 40 and the opening 30h of the main door 30.

Accordingly, the user may access the opening 30h of the main door 30 by opening the sub door 40, and at the same time, view the interior of the storage compartment through the transmissive part 42 even in a closed state of the sub door 40.

The sub door 40 may be formed of a transparent material, such as glass, in an area corresponding to the transmissive part 42 and thus may be transparent.

Meanwhile, the transmissive part 42 of the sub door 40 may be formed of a material whose light transmittance and reflectance may be selectively adjusted, allowing for selective operation between a transparent or opaque state depending on the user's operation.

Accordingly, the transmissive part 42 may be made transparent only in a desired state of the user, allowing visibility into the interior of the first storage compartment 21, and otherwise maintained in an opaque state.

As used herein, the term "opaque state" refers to a state in which the interior of the storage compartment is not clearly visible through the transmissive part 42 when viewed from a typical use distance of a refrigerator and is not limited to a completely opaque state.

For example, referring to FIG. 1, when the transmissive part 42 of the sub door 40 is opaque, the sub door 40 may have an opaque black color or a mirror-like appearance.

In this way, the sub door 40 maintains an opaque state, allowing the refrigerator 1 to have a simple and elegant exterior with a mirror-like texture of a beautiful black color.

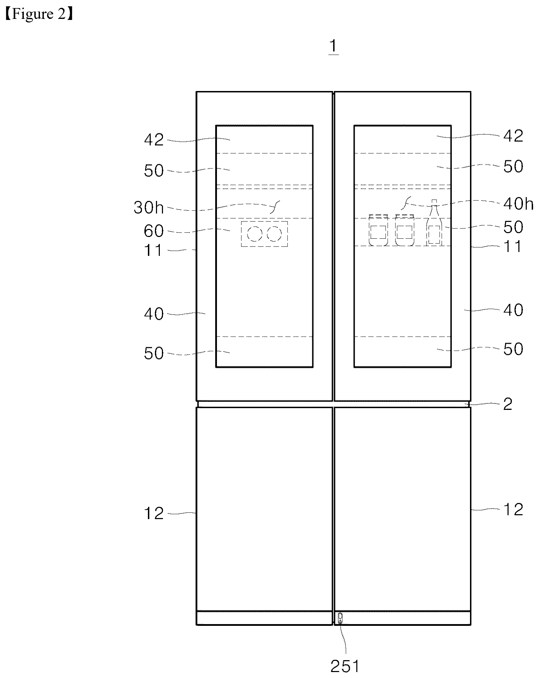

Referring to FIG. 2, when the transmissive part 42 of the sub door 40 is transparent, the user may not only view the interior of the storage compartment through the transmissive part 42, but also view one side of the basket assembly 50 exposed through the opening 30h.

The term "transparent state" refers to a state in which the interior of the storage compartment is partially visible through the transmissive part 42 when viewed from a typical use distance of the refrigerator 1 and is not limited to a completely transparent state.

Accordingly, the user may distinguish between food items stored in the basket assembly 50 or check the storage state of the basket assembly 50 even without opening the sub door 40.

When the sub door 40 becomes transparent, the display unit 60 disposed behind the sub door 40 also becomes visible, allowing the operating state of the refrigerator 1 to be displayed externally.

In this way, when the transmissive part 42 of the sub door 40 is transparent, this state maximizes usability and may be referred to as a see-through screen state or a "smart Instagram view" state.

One or more door lighting units 72 may be disposed on the sub door 40.

For example, the door lighting unit 72 may be disposed on the rear surface of the sub door 40 and positioned adjacent to an upper area of the transmissive part 42, but is not limited thereto, and may also be positioned adjacent to a lower area or side area of the transmissive part 42.

In this way, by arranging the door lighting unit 72 adjacent to the transmissive part 42 of the sub door 40, the user can clearly view the interior of the storage compartment through the transmissive part 42 even in a dark environment.

The door lighting unit 72 may be controlled to be turned on or off depending on the situation even in a state in which the sub door 40 is open or closed.

A first detector 251 for detecting the user's human body may be disposed on the first door 11 or the second door 12.

For example, the first detector 251 is illustrated as being disposed on a lower front area of the second door 12, but is not limited thereto.

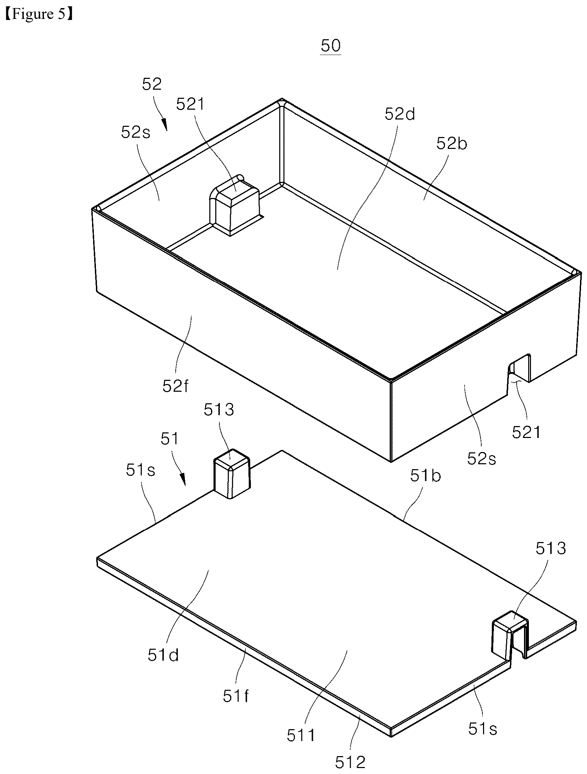

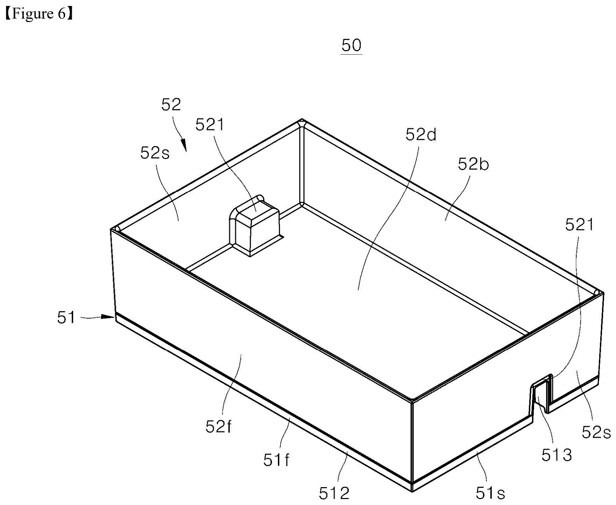

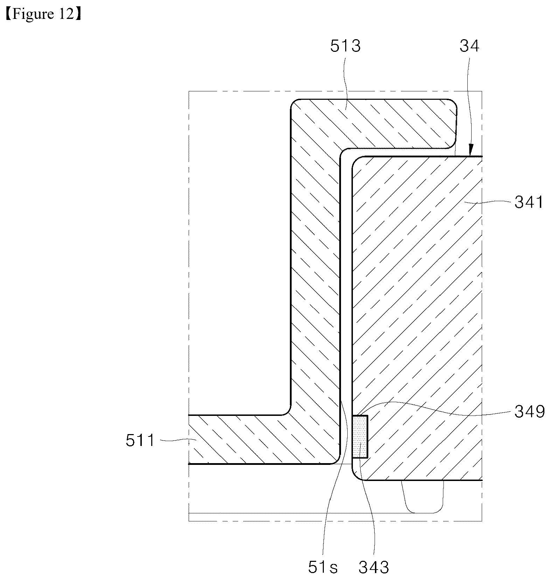

Hereinafter, the basket assembly 50 mounted on the first door 11 and the fixing structure of the basket assembly 50 will be described in more detail with further reference to FIGS. 5 to 13.

A hanging part 34 for fixing the basket assembly 50 may be disposed on both inner surfaces of the door liner 32 of the first door 11.

The hanging part 34 may be provided in pairs that protrude toward both side surfaces of the basket assembly 50 and may support lower portions of both side surfaces of the basket assembly 50.

In one embodiment, the hanging part 34 may be integrally formed with the first door 11.

For example, the hanging part 34 may be integrally formed with the door liner 32 and formed to protrude from the inner surface of the door liner 32 toward the opening 30h.

In another embodiment, the hanging part 34 may be formed in the form of a separate module and detachably attached to the first door 11.

A light source 343 for emitting light to the basket assembly 50 may be mounted inside the hanging part 34.

Accordingly, the hanging part 34 may have an exterior formed by a case 341 having a shape capable of storing the light source 343.

Accordingly, according to the present invention, since the hanging part 34 for fixing the basket assembly 50 to the first door 11 is configured such that the light source 343 for emitting light to the basket assembly 50 is mounted therein, the hanging part 34 may fix the basket assembly 50 and at the same time, emit light toward at least a portion of the basket assembly 50.

Accordingly, the fixing and lighting effects of the basket assembly 50 can be achieved simultaneously with a single structure rather than separate structures.

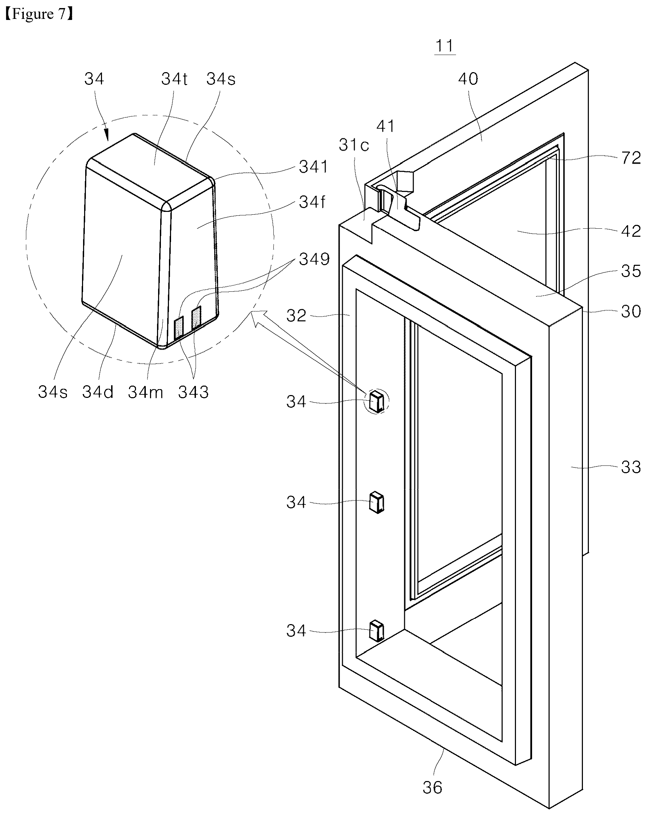

Referring to FIG. 7, the case 341 may be composed of a front surface 34f, a pair of side surfaces 34s disposed on both sides of the front surface 34f, and an upper surface 34t and a lower surface 34d that respectively finish upper and lower portions.

The front surface 34f of the case 341 may be formed to have a trapezoidal shape with a width that decreases from the bottom to the top.

Corners 34m may be formed between the front surface 34f and the side surfaces 34s of the case 341.

The corners 34m may be formed in a diagonal direction between the front surface 34f and the side surfaces 34s and may have a curved shape.

In addition, the corners 34m may be formed between the front surface 34f and the upper surface 34t of the case 341 and between the upper surface 34t and the side surfaces 34s of the case 341.

The case 341 may have an open rear surface facing the front surface 34f, and a rear surface of the case 341 may communicate with the interior of the door liner 32.

Accordingly, the pair of hanging parts 34 mounted on the door liner 32 and facing each other may be disposed such that the front surfaces 34f face each other.

The light source 343 may be fixedly mounted inside the case 341 through the rear surface of the case 341.

One or more aperture holes 349, which expose at least a portion of the light source 343 to the outside, may be formed in a lower area of the front surface 34f of the case 341.

The light source 343 mounted inside the case 341 may emit light to the outside through the aperture holes 349.

The light source 343 mounted inside the case 341 may be provided as a single unit, but is not limited thereto, and may be provided as multiple units.

When the light source 343 is provided as multiple units, each light source 343 may be disposed in the same direction, but is not limited thereto, and may be disposed in different directions.

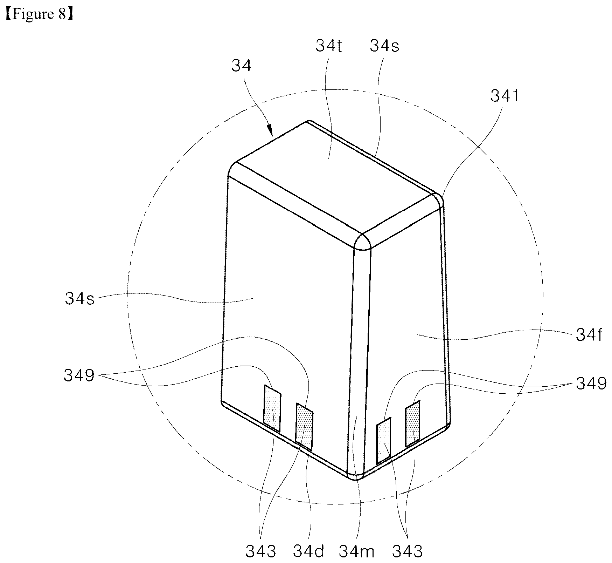

Referring to FIG. 8, one or more aperture holes 349 may be additionally formed on each of both side surface 34s of the case 341, and light emitted from the light source 343 may be emitted to the outside through the aperture holes 349.

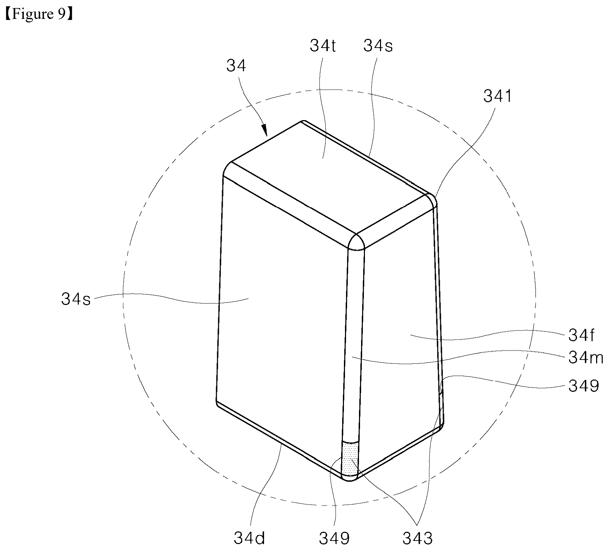

In addition, referring to FIG. 9, the light emitted from the light source 343 may be emitted to the outside through the aperture holes 349 formed in the corners 34m positioned between the front surface 34f and the side surfaces 34s of the case 341.

In this way, the light source 343 mounted on the case 341 may emit light at various angles, thereby reducing a shadow area in which light is not emitted.

The light source 343 may be configured to emit light of various colors, but is not limited thereto, and may emit light of a single color.

For example, the light source 343 may be composed of an RGB light emitting diode (LED), but is not limited thereto.

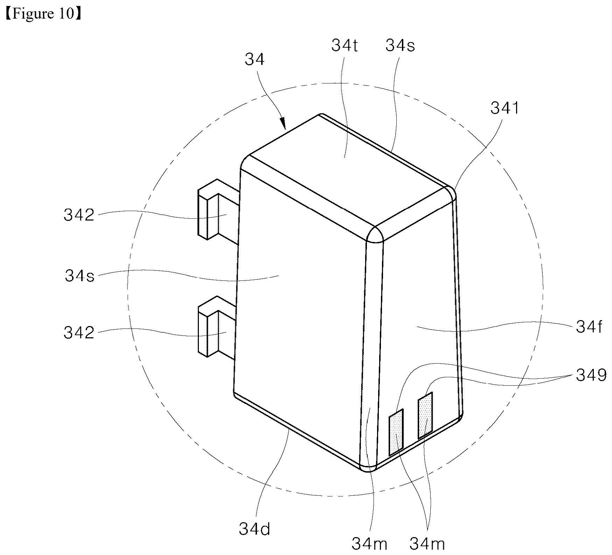

In addition, referring to FIG. 10, the case 341 may have one or more hook parts 342.

For example, the hook parts 342 may be formed to protrude rearward from the rear surface of the case 341, but are not limited thereto.

The case 341 may be detachably attached to the door liner 32 through the hook parts 342.

Meanwhile, the basket assembly 50 may include a support member 51 mounted on the hanging part 34 and the basket part 52 seated on the support member 51.

The support member 51 may include a support body portion 511 that supports a lower surface of the basket part 52.

The support body portion 511 may be formed in the overall plate shape.

The support body portion 511 may include a side edge portion 512 having a predetermined width in the vertical direction.

The side edge portion 512 may include a front surface 51f corresponding to the front surface of the basket assembly 50, a rear surface 51b facing the front surface 51f, and a pair of side surfaces 51s corresponding to both side surfaces of the basket assembly 50.

A front direction of the basket assembly 50 used herein may refer to a direction of the basket assembly 50 perceived by a user in an open state of the first door 11, and a rear direction of the basket assembly 50 may refer to a direction of the basket assembly 50 perceived by the user through the transmissive part 42 in a closed state of the first door 11.

A pair of seating portions 513 protruding upward from the support body portion 511 may be formed on both sides of the support body portion 511.

The seating portion 513 may be formed to be inserted inward from ends of the side edges 512 of the support body portion 511.

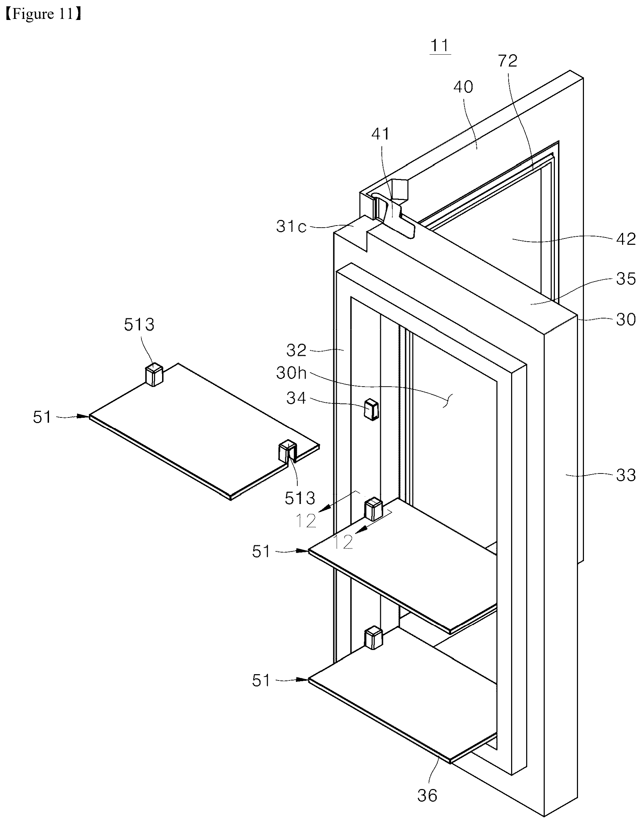

Referring to FIG. 11, the support member 51 may be configured such that the seating portion 513 is seated on the hanging part 34 of the first door 11 and fixed to the first door 11.

The seating portion 513 may be formed to have a shape corresponding to the hanging part 34 such that the seating portion 513 is seated on the hanging part 34 and the hanging part 34 is positioned in an inner lower area of the seating portion 513.

Accordingly, the seating portion 513 may be formed to have an open rear surface and lower surface into which the hanging part 34 is inserted.

For example, the seating portion 513 may also be formed to have a trapezoidal shape with a width that decreases from the bottom to the top.

In addition, an inner diameter of an inner perimetric surface of the seating portion 513 may be formed to be larger than an outer diameter of an outer perimetric surface of the hanging part 34, thereby enabling the support member 51 to be easily attached to and detached from the hanging part 34.

In this case, when the seating portion 513 of the support member 51 is seated on the hanging part 34, the light source 343 mounted on the hanging part 34 may be aligned to face the side surface 51s of the support body portion 511 positioned below the seating portion 513 of the support body portion 511.

Accordingly, the light source 343 may be arranged to horizontally overlap the support body portion 511 of the support member 51.

For example, a vertical width of the support body portion 511 is preferably formed to be greater than a vertical width of the aperture hole 349 through which the light source 343 is exposed, and the aperture hole 349 is preferably formed to completely overlap the support body portion 511 in the horizontal direction.

In this way, the light emitted from the light source 343 toward the support member 51 may be guided toward the side edges 512 of the support member 51.

Accordingly, the support member 51 may serve as a light guide member that guides light through diffusion or scattering.

For example, the support member 51 may be formed of a polymer material such as PMMA, but is not limited thereto.

Since the support body portion 511 is configured such that light incident on the support member 51 is totally reflected by upper and lower surfaces of the support body portion 511 and diffusely reflected by the side edges 512 of the support body portion 511, light may be emitted along the side edges 512 without being emitted through the upper and lower surfaces of the support body portion 511.

For example, the upper and lower surfaces of the support body portion 511 are formed to have flat surfaces, thereby allowing light to be totally reflected by those surfaces.

In addition, light may be diffusely reflected along the side edges 512 through surface treatment of the side edges 512, such as by imparting roughness, attaching diffusion tape, or applying a coating solution to the side edges 512 of the support body portion 511.

In this way, according to the present invention, since the support member 51 supporting the lower portion of the basket assembly 50 guides the light incident from the light source 343 to the side edges 512 of the support member 51, an lighting effect can be achieved along the side edges 512 of the lower portion of the basket assembly 50, thereby achieving an excellent decoration effect and design differentiation.

In addition, according to the present invention, the light incident on the support member 51 may be emitted not toward the upper and lower surfaces of the support member 51, but along the side edges 512 of the support member 51 to allow the limited amount of light from the light source to be concentrated where lighting is needed rather than scattered to the areas in which lighting is not needed, thereby achieving a more uniform and bright lighting effect along the side edges 512 of the support member 51.

In addition, the first door 11 of the refrigerator 1 according to the present invention may include the main door 30 that includes the opening 30h therein and may be rotated from the cabinet 2, and the sub door 40 that opens and closes the opening 30h of the main door 30 and may be rotated from the main door 30, and the basket assembly 50 is mounted on the main door 30, and thus when the sub door 40 and the main door 30 are opened, the user may perceive the front and rear surfaces of the basket assembly 50.

Accordingly, the basket assembly 50, which achieves the lighting effect along the side edges 512 of the support member 51, can achieve the lighting effect from all surfaces perceived by the user when the sub door 40 and the main door 30 are opened, thereby achieving a design effect based on uniform lighting of the basket assembly 50.

Meanwhile, when the seating portion 513 of the support member 51, which is seated on the hanging part 34 is also formed of the same material as the support member 51, even in the area of the seating portion 513, the light guide function may be implemented, and thus light may be diffusely reflected in the seating portion 513.

However, the seating portion 513 may be an area that is difficult for the user to perceive, and thus may be an area in which light emission is unnecessary.

Accordingly, the inner or outer surface of the hanging part 34 that does not overlap a light-emitting area of the hanging part 34 in which light is emitted by the light source 343 may be light-shielded to block light emission.

For example, a light-shielding layer absorbing light may be printed on the inner or outer surface of the hanging part 34, or a light-shielding film may be attached thereto.

As another example, a surface of the hanging part 34 may be flattened to be totally reflected.

By preventing light emission from the hanging part 34 in this way, it is possible to minimize light leakage in areas in which light emission is unnecessary.

In addition, since light emitted to the unnecessary areas may be emitted along the side edges 512 of the support member 51, the efficiency and brightness of the light emitted from the side edges 512 can be enhanced.

The light-emitting area of the hanging part 34 may correspond to the aperture hole 349 of the hanging part 34.

In addition, according to the present invention, even when the light source 343 is disposed on both side surfaces of the support member 51 and emits light toward both side surfaces of the support member 51, the light may be emitted in the front-rear direction of the support member 511 due to the light guide function of the support body portion 511.

The light source 343 emitting light to the support member 51 may be configured to emit light toward the front and rear surfaces as well as both side surfaces of the support member 51 and to emit light in an oblique direction.

The configuration may vary depending on a mounting direction of the light source 343 mounted on the hanging part 34 in various embodiments.

Meanwhile, the basket part 52 may be formed to have an open upper surface and an overall storage space for storing food items.

The basket part 52 may include a front surface 52f corresponding to the front surface of the basket assembly 50, a rear surface 52b facing the front surface 52f, a pair of side surfaces 52s corresponding to both side surfaces of the basket assembly 50, and a lower surface 52d supporting a storage space at the bottom.

A front direction of the basket assembly 50 used herein may refer to a direction of the basket assembly 50 perceived by a user in an open state of the first door 11, and a rear direction of the basket assembly 50 may refer to a direction of the basket assembly 50 perceived by the user through the transmissive part 42 in a closed state of the first door 11.

A pair of recesses 523 protruding upward from the lower surface 52d of the basket part 52 may be formed on both sides of the basket part 52.

The recesses 523 may be formed to be inserted inward from ends of the side surfaces 52s of the basket part 52.

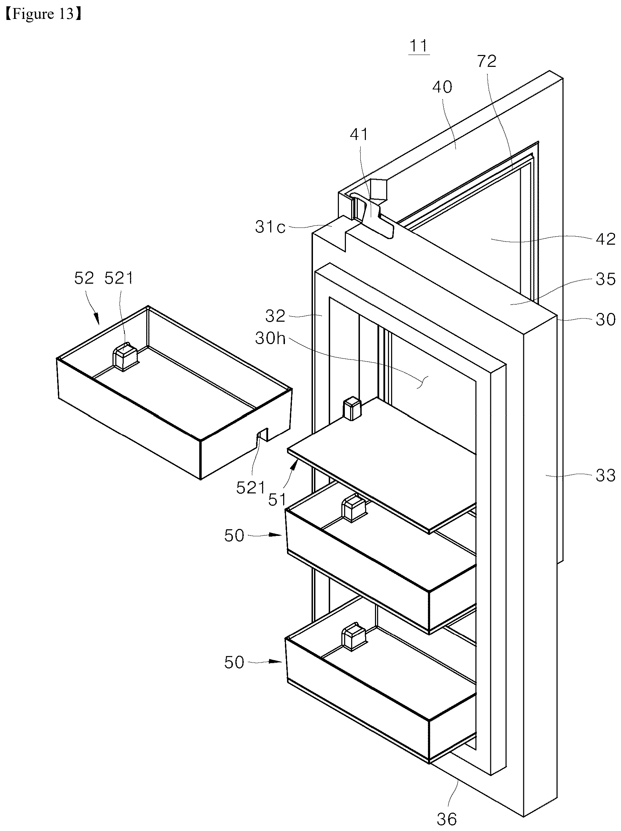

Referring to FIG. 13, the basket part 52 may be configured such that the recess 523 is seated on the seating portion 513 of the support member 51, thereby allowing the basket part 52 to be fixed to the support member 51.

The recess 523 may be formed to correspond to the seating portion 513 such that the recess 523 is seated on the seating portion 513 and the seating portion 513 is positioned in an inner lower area of the recess 523.

Accordingly, the recess 523 may be formed to have open rear and lower surfaces into which the seating portion 513 is inserted.

For example, the recess 523 may also be formed to have a trapezoidal shape with a width that decreases from the bottom to the top.

In addition, an inner diameter of an inner perimetric surface of the recess 523 may be formed to be larger than an outer diameter of an outer perimetric surface of the seating portion 513, thereby enabling the basket part 52 to be easily attached to and detached from the support member 51.

Accordingly, according to the present invention, since the basket part 52 has a removable structure including the support member 51, which is seated on the hanging part 34 and emitted by the light from the light source 343, and the basket part 52 detachable from the support member 51, it is possible to achieve easy cleaning or food storage by removing only the basket part 52.

The basket part 52 may be formed of a different material from the support member 51.

For example, the support member 51, which serves as a light guide function, is preferably formed of a material suitable for light diffusion and emission, and the basket part 52 is preferably formed of a material suitable for food storage and damage prevention.

For example, the basket part 52 is preferably formed of a plastic material with higher strength than the support member 51.

In addition, according to the present invention, the positions of the light source 343 and the support member 51 can be maintained consistently regardless of whether the basket part 52 is removed, thereby preventing changes in the amount or direction of lighting of the basket assembly 50 that may vary depending on unintended changes in the position of the light source 343.

The example in which the basket assembly 50 has a removable structure in which the support member 51 and the basket part 52 are separated has been described above, but the present invention is not limited thereto, and the support member 51 and the basket part 52 may be formed integrally.

The support member 51 and the basket part 52 may not be physically distinct concepts, but rather conceptually distinct concepts.

For example, the basket assembly 50 may be formed of a material that performs a light guide function and surface-treated to be diffusely reflected in an area corresponding to the support member 51 in which light emission is required and totally reflected in an area corresponding to the basket part 52 in which light emission is not required.

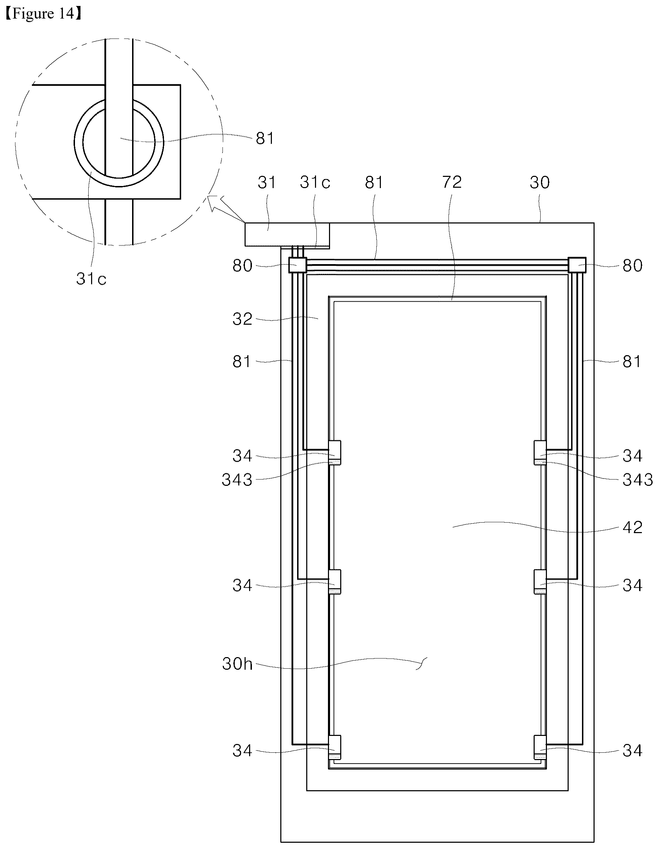

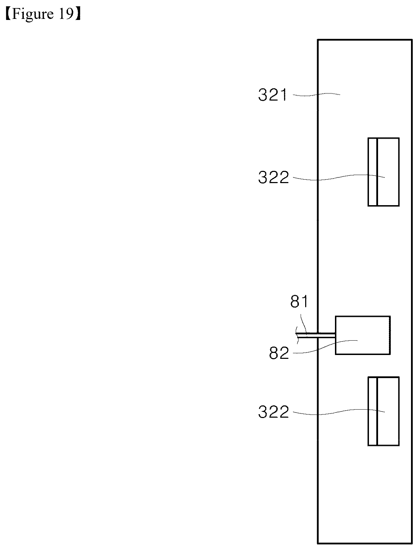

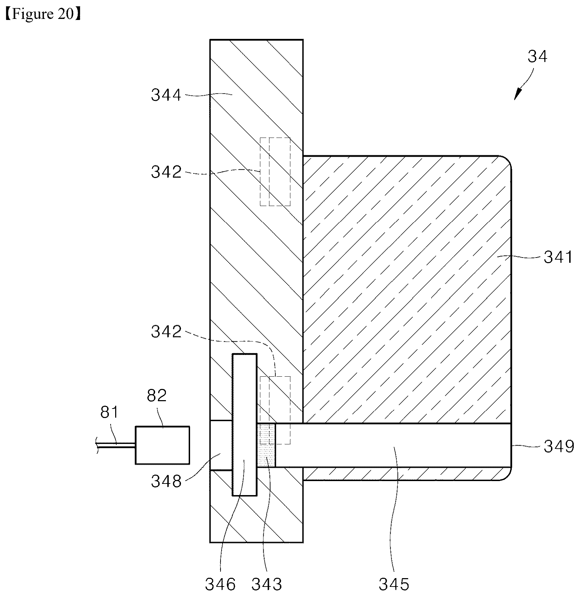

Hereinafter, power and signal application structures according to various shapes of the hanging part 34 will be described with further reference to FIGS. 14 to 20.

Referring to FIG. 14, the light source 343 may be fixedly mounted within the hanging part 34 integrally formed with the door liner 32.

Accordingly, an electric wire 81 that supplies power and signals to the light source 343 may be connected from the cabinet 2 through a hinge connection portion 31c to which the main hinge 31 is connected.

For example, the electric wire 81 passing through the hinge connection portion 31c may be connected to the light source 343 positioned at each hanging part 34 through a connector 80 positioned at each middle point.

The interior of the first door 11 may be filled with a foam material for insulation.

Accordingly, when the hanging part 34 is integrally formed with the door liner 32, the interior of the hanging part 34 may also be filled with a foam material.

Accordingly, according to the present invention, when the hanging part 34 is integrally formed with the first door 11, the foam material can prevent foaming performance leakage in the area in which the hanging part 34 is disposed, and the position of the light source 343 mounted within the hanging part 34 can be continuously maintained by the foam material at the same level.

Accordingly, it is possible to prevent changes in the amount or direction of lighting of the basket assembly 50, which may vary depending on unintended changes in the position of the light source.

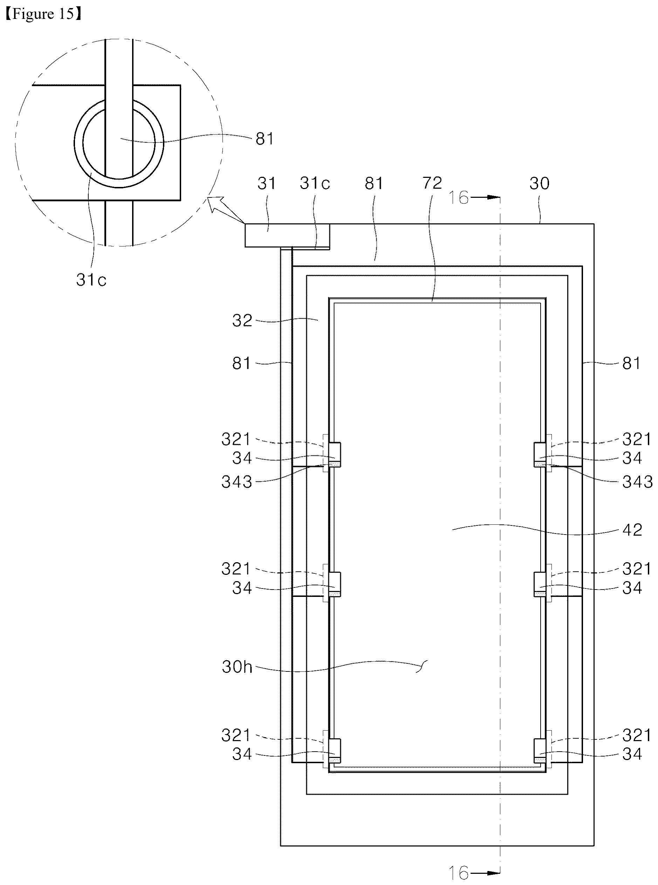

Referring to FIGS. 15 to 20, the hanging part 34 may be detachably attached to the door liner 32 rather than being integrally formed with the door liner 32.

In this case, embedded portions 321 may be formed on inner side surfaces of the door liner 32, and at least a portion of the hanging part 34 may be inserted into and fixed to the embedded portion 321.

In this way, when the hanging part 34 is detachably attached to the first door 11, even when defects occur in the light source 343 mounted within the hanging part 34, repair or replacement of the light source 343 can be performed quickly and easily.

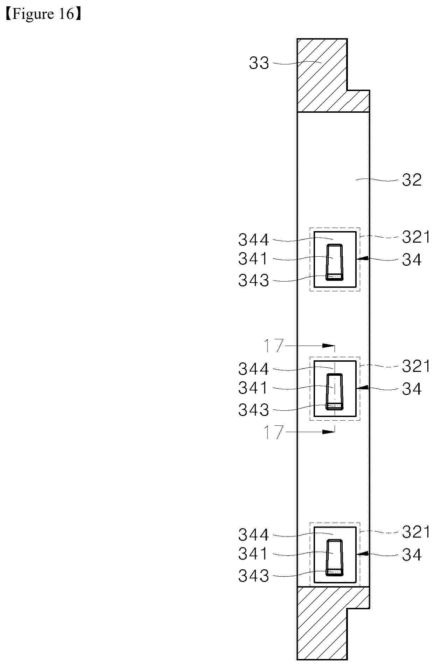

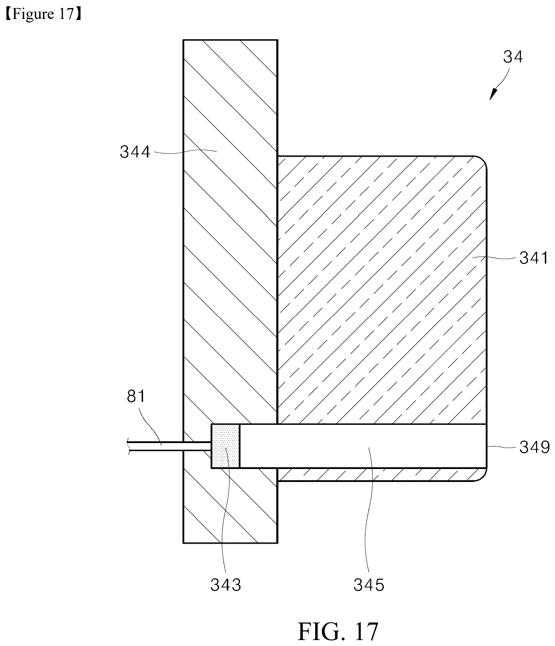

Referring to FIGS. 16 and 17, the hanging part 34 may include the case 341 and an insertion portion 344 positioned on the rear surface of the case 341.

When the hanging part 34 is inserted into and fixed to the embedded portion 321, the insertion portion 344 may be inserted into the embedded portion 321 to attach the hanging part 34 to the embedded portion 321, and the case 341 may protrude outward to support the seating portion 513 of the support member 51.

To ensure stable insertion and fixation of the hanging part 34, the insertion portion 344 may be formed to have a larger surface area than the case 341.

A light guide part 345 may be additionally disposed between the light source 343 mounted inside the hanging part 34 and the aperture hole 349 of the case 341.

The light guide part 345 may be formed of the same polymer material, such as PMMA, as the support member 51, but is not limited thereto.

As the light guide part 345 is disposed between the light source 343 and the aperture hole 349 of the case 341, even when the light source 343 of the hanging part 34 and the support member 51 of the basket assembly 50 are misaligned, light may be guided so that the light source 343 can be stably emitted to the side surfaces of the support member 51.

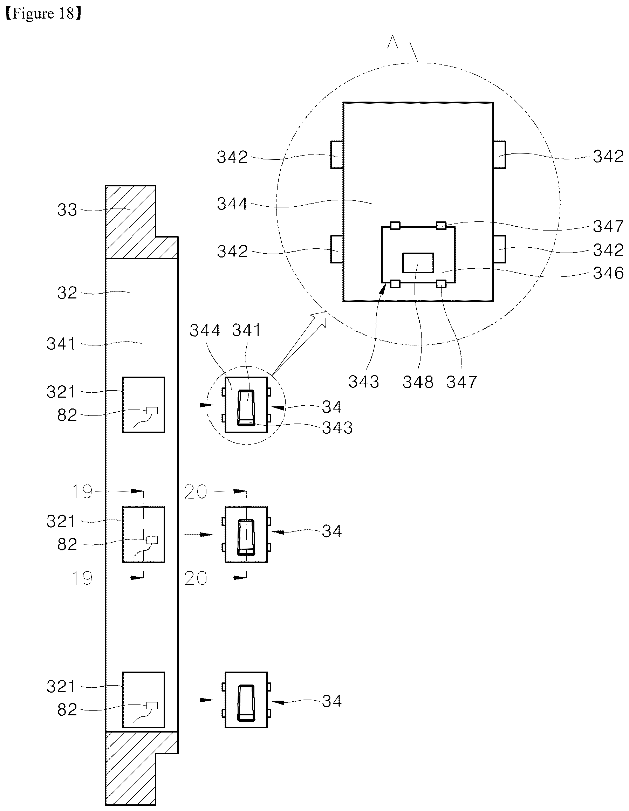

Referring to FIGS. 18 to 20, one or more hook portions 342 may be formed on both side surfaces of the hanging part 34, and a hook fastening portion 322 having a fastening structure fastened to the hook portion 342 may be formed on an inner surface of the embedded portion 321.

Referring to FIG. 18, which illustrates a rear surface A of the hanging part 34, the light source 343 mounted on a substrate 346 may be firmly fixed to the hanging part 34 by being hook-coupled to a plurality of fixing portions 347 formed in the insertion portion 344 and fixing the substrate 346.

In addition, the substrate 346 may be fixed using an adhesive material, such as a silicone adhesive, rather than hook-coupling with the separate fixing portion 347.

In addition, the substrate 346 may be fixed using both a hook-coupling method and an adhesive fixing method, and additional processing, such as waterproofing, may also be performed on a surface on which the substrate 346 is fixed.

A connector connection portion 348 may be provided on the rear surface of the substrate 346, and the connector connection portion 348 may be connected to an electric wire connector 82 of the electric wire 81, thereby enabling power and signals to be applied to the substrate 346.

In this way, when the hanging part 34 is detachably attached to the door liner 32, the interior of the door liner 32 may be foamed by a foam material before the hanging part 34 is fixed, and then the hanging part 34 may be attached.

When the interior of the door liner 32 is foamed by foam material, the electric wire connector 82 of the electric wire 81 is provided to protrude outward from the foam material, and thus can be easily connected to the connector connection portion 348 of the substrate 346 built into the hanging part 34.

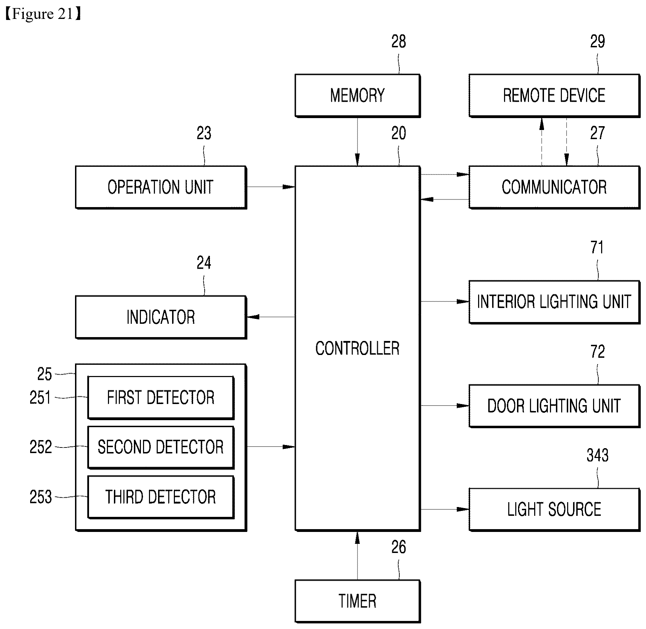

Hereinafter, a block diagram illustrating the flow of control signals of the refrigerator will be described with reference to FIG. 21.

As described above, the refrigerator 1 may include lighting devices, such as the light source 343, the interior lighting unit 71, the door lighting unit 72, and the like, which emit light onto the basket assembly 50.

The lighting devices may be turned on and off according to a controller 20 provided in the refrigerator 1.

For example, the operation of the lighting devices may be performed by a user's manipulation of an operator 23.

The operator 23 may be provided on one side of the refrigerator 1, and for example, provided on one side of the cabinet 2 or the door.

In addition, the operator 23 may be provided on the display unit 60 mounted on the main door 30 as described above.

The user may set the operating state of the lighting devices, such as operating time, operating conditions, light emission colors, and the like, by manipulating the operator 23.

In addition, the lighting devices may be operated and may have operating conditions set through a remote device 29 that is spaced apart from the refrigerator 1.

The refrigerator 1 may communicate with the remote device 29 through a communicator 27 connected to the controller 20, allowing the user to control the operation of the lighting devices through the remote device 29.

The communicator 27 may communicate with a server for managing the remote device 29 and/or home appliances in various ways.

For example, the communicator 27 may have a structure capable of communicating via at least one of wired, wireless, and short-range communication (e.g., Bluetooth, Wi-Fi, Zigbee, NFC, or the like).

The remote device 29 may be various communication-enabled devices, such as a dedicated terminal, a mobile phone, a tablet, a portable PC, a desktop PC, a remote control, a Bluetooth speaker, and the like.

The user may manipulate and set the operating state of the lighting devices, such as operating time, operating conditions, light emission colors of the light source, and the like, through the manipulation of the remote device 29.

For example, simple manipulation and settings can be achieved through an application or dedicated program installed on the user's mobile phone.

The refrigerator 1 may further include a timer 26 capable of counting the elapsed time after a specific event occurs.

Meanwhile, the lighting devices may be operated based on the detection results of a detection unit 25.

The detection unit 25 may include, for example, one or more detectors, such as the first detector 251, which is a proximity detector for measuring a distance from the user and sensing the user's proximity, a second detector 252, which is a knock detector for detecting the user's door knocking manipulation, and a third detector 253, which is an illuminance detector for sensing the user's proximity through changes in illuminance.

For example, the detectors may use various sensors, such as an infrared sensor, an ultrasonic sensor, a laser sensor, and the like.

The detection unit 25 may be provided on one side of the cabinet 2 or the door and disposed at various positions to detect the user's proximity, and a plurality of detection units 25 may be provided at different positions.

For example, when the user approaches the refrigerator 1 within a reference distance to use the refrigerator 1, the first detector 251 may detect this and transmit a signal to the controller 20, causing the lighting devices to be turned on.

In addition, when the user moves away from the refrigerator 1, the first detector 251 may detect this and transmit a signal to the controller 20, causing the lighting devices to be turned off.

Each of the second detector 252 and the third detector 253 may detect the user's door knocking manipulation and changes in lighting and transmit signals to the controller 20 to turn on and off the lighting devices in the same manner as the first detector 251.

The refrigerator 1 may further include an indicator 24.

The indicator 24 may be provided on the display unit 60 mounted on the main door 30 as described above.

For example, the indicator 24 may include a touch panel capable of inputting commands by a user's touch input, or a display panel for outputting a screen.

The refrigerator 1 may further include a memory 28.

For example, color information of lighting devices when operating in each specific situation and operation information of specific lighting devices may be stored in the memory 28 and provided to the controller 20.

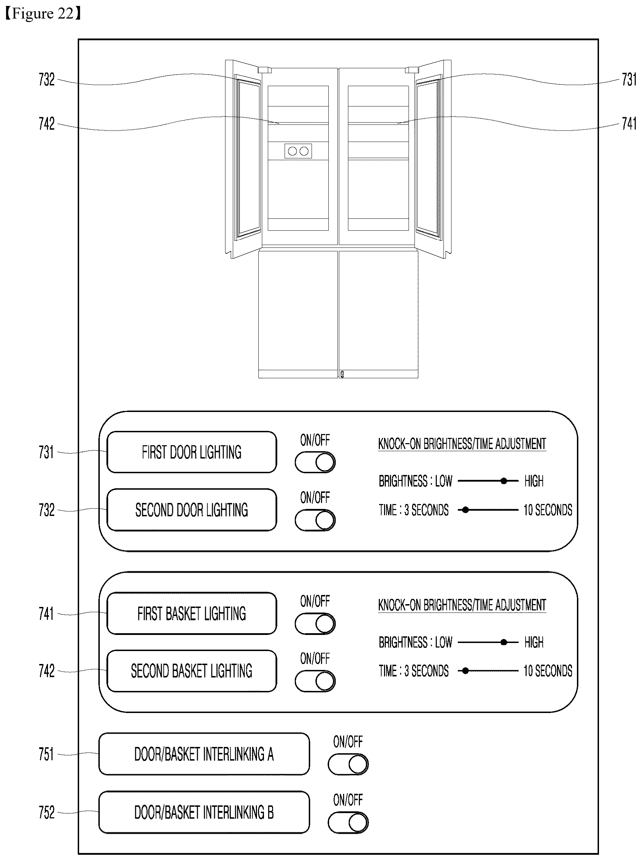

FIG. 22 is a view illustrating a screen displayed on a remote device or display unit.

For example, a first door lighting 731 may be configured as a light mounted on a sub door of an upper right door, and a second door lighting 732 may be set as a light mounted on a sub door of an upper left door.

In addition, a first basket lighting 741 may be configured to illuminate a basket assembly of the upper right door, and a second basket lighting 742 may be configured to illuminate a basket assembly of the upper left door.

In this case, setting values related to the second detector 252, such as knock-on brightness and time adjustment, may be set.

In addition, the interlinked operation of the door lighting and the basket assembly may be set according to various situations, such as scenario A 751 in which the door lighting and the basket assembly lighting are interlinked, and scenario B 752 in which the door lighting and basket assembly lighting are interlinked.

For example, when the first detector 251 detects the user's proximity, a scenario in which the first door lighting 731 may emit light and the second basket lighting 742 sequentially emits light 3 seconds later may be set.

As another example, when the second detector 252 detects the user's door knocking manipulation, a scenario in which the first door lighting 731 may emit red light and the second basket lighting 742 may emit light sequentially or simultaneously in the same red color or a complementary color may be set.

As still another example, when the third detector 253 detects a change in illuminance, a scenario in which the second door lighting 732 and the first basket lighting 741 may emit light may be set.

In this way, according to the present invention, the interior of the storage compartment may be viewed through the front surface of the door, various types of detectors may be included, and the light source may be turned on or off in response to a signal from the detector, and thus even in a closed state of the door, the lighting effect of the basket assembly can be achieved in response to the on or off of the light source, thereby providing an excellent decoration effect without unnecessary leakage of cold air.

In addition, according to the present invention, a lighting unit may be provided within the storage compartment or on the door and the controller may control the on or off the light source and the lighting unit individually or in an interlinked manner in response to the signal from the detector or remote device, thereby providing a more excellent decoration effect in various situations and in various ways.

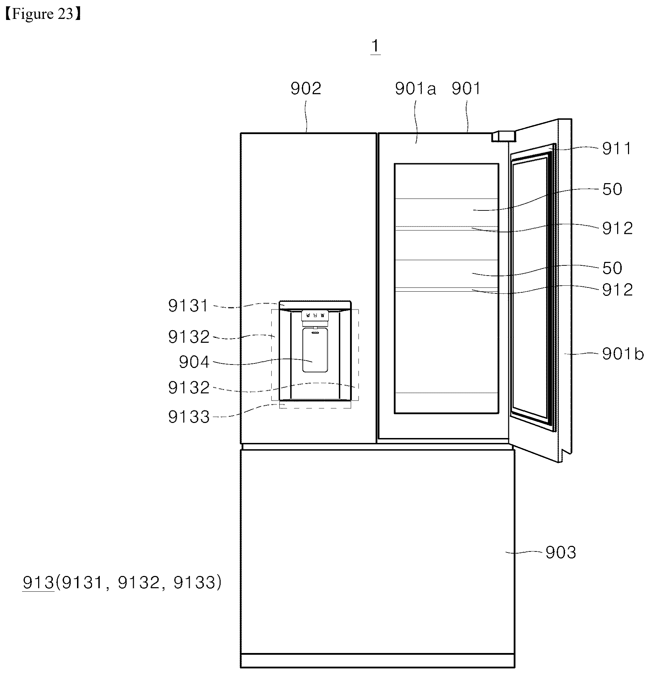

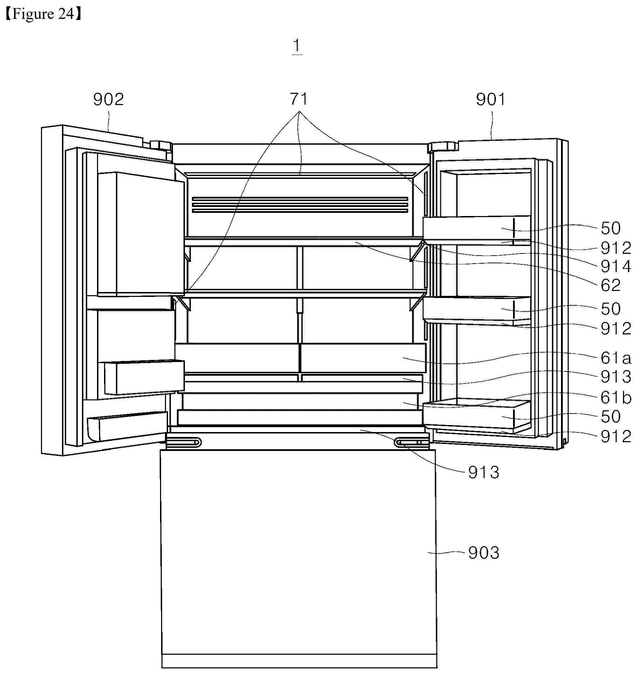

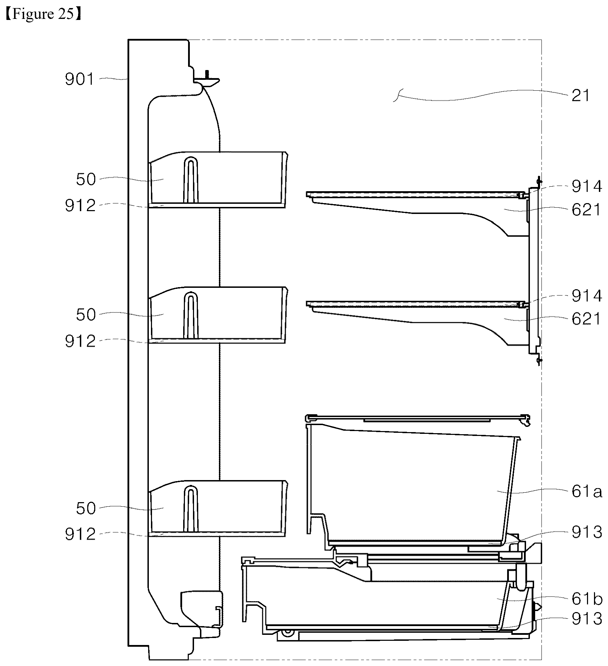

Hereinafter, a refrigerator according to another embodiment will be described with further reference to FIGS. 23 to 26. Additional description of the contents that overlap the above descriptions will be omitted, and the omitted contents may be applied to the refrigerator according to another embodiment, which will be described below.

The refrigerator 1 according to another embodiment may include a first door 901 and a second door 902 for opening and closing the first storage compartment 21, and a third door 903 for opening and closing the second storage compartment. The first storage compartment 21 may be disposed above the second storage compartment. The first door 901 and the second door 902 may be rotary doors that open and close the open front surface of the first storage compartment 21 by rotation. The third door 903 may be a drawer-type door that opens and closes the open front surface of the second storage compartment by being inserted into or pulled out from the second compartment in the front-rear direction.

The first door 11 may be a double-door type, including a main door 901a that opens and closes the first storage compartment 21 and a sub door 901b that is rotatably disposed on a front surface of the main door 901a to open and close the front surface of the main door 901a. A door lighting 911 may be mounted on the sub door 901b. The door lighting 911 may be the door lighting unit 72 described in the previous embodiment. The main door 901a may be provided with one or more basket assemblies 50, each of which may be provided with a basket lighting 912. The basket lighting 912 may be the hanging part 34 including the light source 343 as described in the previous embodiment, but is not limited thereto. For example, the basket lighting 912 may be implemented as various types of lights that may be provided on the lower or side surface of the basket assembly 50 and may emit light onto the basket assembly 50.

One or more internal lighting units 71 for emitting light into the first storage compartment 21 may be disposed within the first storage compartment 21.

In addition, one or more storage units 61 for storing food items may be disposed within the first storage compartment 21. For example, the storage unit 61 may include a first storage 61a and a second storage 61b disposed below the first storage 61a. A storage unit lighting 913 may be disposed in each of the first storage 61a and the second storage 61b. The storage unit lighting 913 may be the hanging part 34 including the light source 343 as described in the previous embodiment, but is not limited thereto. For example, the storage unit lightings 913 may be implemented as various types of lights which may be disposed on the lower or side surfaces of the first storage 61a and the second storage 61b and may emit light onto the first storage 61a and the second storage 61b.

The first storage 61a and the second storage 61b may be drawer-type storages that are inserted into or pulled out in the front-rear direction. The first storage 61a and the second storage 61b may be guided to be inserted into and pulled out in the front-rear direction along rails positioned on both side surfaces thereof. For example, the storage unit lightings 913 may be fixed to the rails and may emit light onto the first storage 61a and the second storage 61b. In addition, as another example, the storage unit lighting 913 may be fixed to the side surface of the first storage compartment 21 and may emit light into the first storage 61a and the second storage 61b. In this case, the storage unit lighting 913 is not restricted to the movement of the first storage 61a and the second storage 61b, which are inserted into or pulled out in the front-rear direction, but may be disposed to be fixed to the rails or the side surface of the first storage compartment 21.

In addition, one or more shelves 62 for supporting food items may be disposed within the first storage compartment 21. A shelf lighting 914 may be disposed on the shelf 62. The shelf lighting 914 may be the hanging part 34 including the light source 343 as described in the previous embodiment, but is not limited thereto. For example, the shelf lighting 914 may be implemented as various types of lightings that may be fixed to the lower surface or side surface of the shelf 62 and may emit light onto the shelf 62.

The shelf 62 may be fixed by one or more shelf fixing units 621 that are mounted on the rear or side surfaces of the first storage compartment 21 and fix the shelf 62. The shelf fixing unit 621 may fix the shelf 62 in a cantilever manner. For example, the shelf lighting 914 may be fixed to the shelf fixing unit 621 and may emit light onto the side surfaces of the shelf 62. In addition, as another example, the shelf lighting 914 may be fixed to the side surface of the first storage compartment 21 and may emit light onto the shelf 62.

Meanwhile, the second door 902 may include a dispenser 904 that allows a user to dispense ice or water without opening the door. A dispenser lighting 913 may be disposed on at least one side of the dispenser 904. The dispenser lighting 913 may be the hanging part 34 including the light source 343 as described in the previous embodiment, but is not limited thereto. For example, the dispenser lighting 913 may be implemented as various types of lightings that may be fixed to one or more of upper, lower, and side surfaces of the dispenser 904 and may emit light onto the dispenser 904. In this case, a first dispenser lighting 9131 may be disposed on the upper surface of the dispenser 904, a pair of second dispenser lightings 9132 may be disposed on both side surfaces of the dispenser 904, respectively, and a third dispenser lighting 9133 may be disposed on the lower surface of the dispenser 904. For example, when the user approaches the refrigerator 1 and a proximity sensor detects this, the first dispenser lighting 9131, the second dispenser lighting 9132, and the third dispenser lighting 9133 may all be configured to be turned on. In addition, as another example, in the case of the dispenser lighting 913 and the illuminance sensor of the refrigerator 1 linked, when the illuminance is high, the first dispenser lighting 9131, the second dispenser lighting 9132, and the third dispenser lighting 9133 may all be turned on, but when the illuminance is low, only some of the first dispenser lighting 9131, the second dispenser lighting 9132, and the third dispenser lighting 9133 may be configured to be turned on.

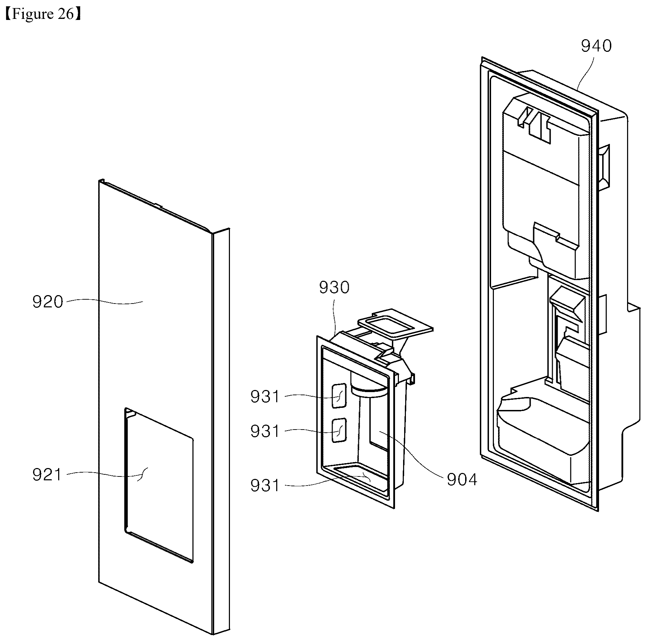

For example, referring to FIG. 26, the second door 902 may include a front plate 920 forming an exterior, and a door liner 940 which is disposed on a rear surface of the front plate 920 and forms the substantial body of the second door 902. A dispenser housing 930 in which the dispenser 904 is mounted may be disposed between the front plate 920 and the door liner 940. The dispenser housing 930 may be seated and housed in the door liner 940. The front plate 920 may include a first opening 921 that may expose the dispenser 904 to the outside. The dispenser housing 930 may have a second opening 931 positioned on one or more of the upper, lower, and side surfaces of the dispenser 904. The dispenser lighting 913 may be disposed in the second opening 931.

The second opening 931 and the dispenser lighting 913 mounted in the second opening 931 may be disposed so as not to be directly exposed to the outside through the first opening 921. For example, the second openings 931 formed in the upper and lower surfaces of the dispenser housing 930 may be disposed to face each other, and the second openings 931 formed on both side surfaces may be disposed to face each other. The dispenser lighting 913 may be fixedly embedded within an insulation material foamed between the dispenser housing 930 and the door liner 940, and the light emitted from the dispenser lighting 913 may be emitted to the outside through the second opening 931. When the dispenser lighting 913 is turned on, the light emitted from the dispenser lighting 913 through the second opening 931 may be emitted to the outside through the first opening 921.

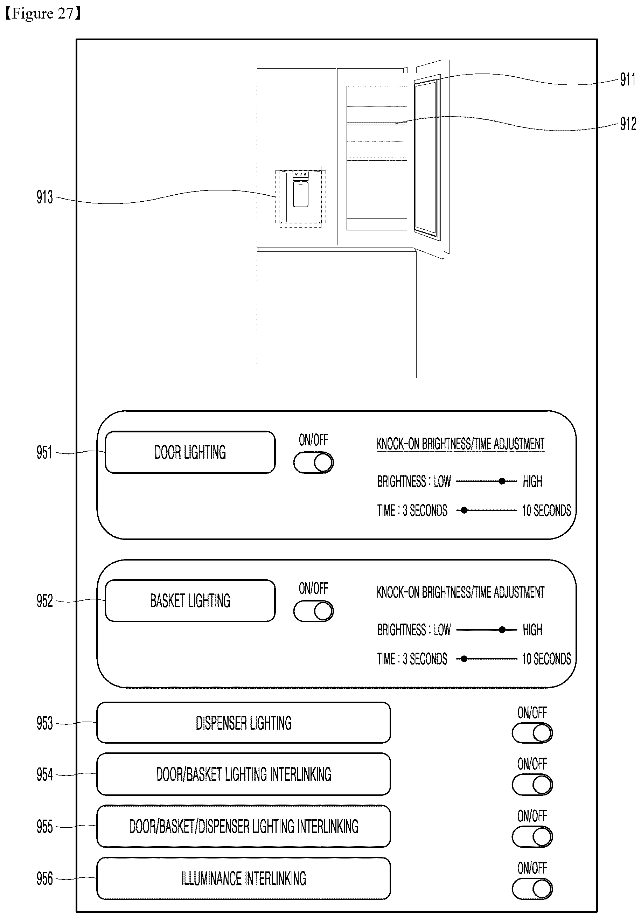

FIG. 27 is a view illustrating a screen implemented in a remote device or display unit according to another embodiment.

For example, the door lighting 911 may be configured as a lighting mounted on the sub door of the upper right door, and the basket lighting 912 may be configured as a lighting mounted on the basket assembly of the upper right door. The dispenser lighting 913 may be configured as a lighting mounted on the upper left door. However, the present invention is not limited thereto, and the door lighting 911 and the basket lighting 912 may be mounted on the upper left door or the lower door. In addition, the dispenser lighting 913 may be mounted on the upper right door.

The door lighting 911, the basket lighting 912, and the dispenser lighting 913 may be set to be turned on or off in conjunction with various types of detector 25, such as the first detector 251, the second detector 252, the third detector 253, and the like.

For example, a door lighting setting screen 951 for controlling the door lighting 911 and a basket lighting setting screen 952 for controlling the basket lighting 912 may be provided. In this case, setting values related to the second detector 252, such as knock-on brightness and time adjustment, in addition to on/off may be set. In addition, a dispenser lighting setting screen 953 for controlling the dispenser lighting 913 may be provided. In this case, the on/off setting values may be provided, but the present invention is not limited thereto, and various setting values, such as knock-on brightness and time adjustment, may also be set.

In addition, a scenario A setting screen 954 in which the door lighting 911 and the basket lighting 912 are interlinked may be provided, a scenario B setting screen 955 in which the door lighting 911, the basket lighting 912, and the dispenser lighting 913 are interlinked may be provided, and a scenario C setting screen 956 in which the lightings are interlinked according to changes in illuminance may be provided. Through these scenario setting screens, the interlinked operations among the door lighting 911, the basket lighting 912, the dispenser lighting 913, and the like according to various situations may also be set.

For example, when the first detector 251 detects the user's proximity, a scenario in which the door lighting 911 may emit light and the basket lighting 912 sequentially emits light 3 seconds later may be set.

As another example, when the second detector 252 detects the user's door knocking manipulation, a scenario in which the door lighting 911 may emit red light and the basket lighting 912 may emit light sequentially or simultaneously in the same red color or a complementary color may be set.

As still another example, when the first detector 251 detects the user's proximity, a scenario in which the door lighting 911, the basket lighting 912, and the dispenser lighting 913 may simultaneously emit light may be set.

As yet another example, when the third detector 253 detects a change in illuminance, a scenario in which the door lighting 911 and the basket lighting 912 may emit light may be set. For example, in cases in which the ambient illuminance is high, such as during the day, an area around the refrigerator 1 is bright, and thus both the door lighting 911 and the basket lighting 912 may be set to be turned on. In addition, in cases in which the ambient illuminance is low, such as at night, the area around the refrigerator 1 is dark, and thus the interior of the refrigerator 1 is sufficiently visible even when the door lighting 911 remains off and only the basket lighting 912 is turned on.

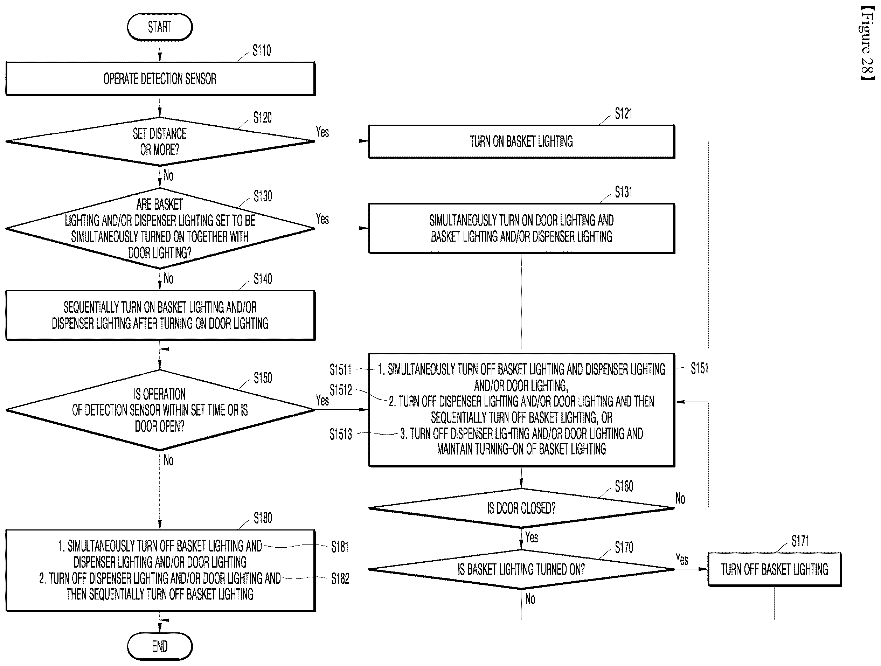

FIG. 28 is a flowchart illustrating a scenario for controlling the lighting of various types of lighting units according to one embodiment.

After the start operation, an operation S110 in which the detection sensor of the refrigerator 1 is operated may be performed. In this case, the detection sensor may be one of the first detector 251, the second detector 252, and the third detector 253.

When the detection sensor is operated, an operation S120 of measuring a distance between a user and the refrigerator 1 and comparing the measured distance with a preset distance may be performed by a controller. When the distance between the user and the refrigerator 1 is greater than or equal to the preset distance, an operation S121 of turning on the basket lighting 912 may be performed. That is, when the distance between the user and the refrigerator 1 is relatively long, only the basket lighting 912 may be turned on. When the distance between the user and the refrigerator 1 is less than the preset distance, an operation S130 of determining whether the basket lighting 912 and/or the dispenser lighting 913 are set to be turned on simultaneously with the door lighting 911 may be performed. That is, when the distance between the user and the refrigerator 1 is relatively short, the basket lighting 912 and/or the dispenser lighting 913 may also be turned on together with the door lighting 911. A case in which each lighting is turned on may not only refer to a state in which the brightness of the lighting is maintained continuously, but also a state in which the brightness of the lighting changes, such as dimming or flickering.

When the lightings are set to be simultaneously turned on in this case, an operation S131 of simultaneously turning on the door lighting 911 together with the basket lighting 912 and/or the dispenser lighting 913. When the lightings are not set to be simultaneously turned on in this case, an operation S140 of sequentially turning on the basket lighting 912 and/or the dispenser lighting 913 after a predetermined time following the turning-on of the door lighting 911 may be performed. In this case, the simultaneous-on setting of the lightings may be preset by the user on a remote device or a display unit.

After one of operations S121, S131, and S140 is performed, an operation S150 of determining whether the operation of the detection sensor is continuously maintained within a preset time or the door is open may be performed. In this case, when the operation of the detection sensor is continuously maintained within the preset time or the door is open, an operation S151 may be performed. Operation S151 may include various types of scenario operations, such as an operation S1511 of simultaneously turning off the basket lighting 912 and the dispenser lighting 913 and/or the door lighting 911, an operation S1512 of sequentially turning off the basket lighting 912 after the dispenser lighting 913 and/or the door lighting 911 are turned off, and an operation S1513 of turning off the dispenser lighting 913 and/or the door lighting 911 and maintaining the turning-on of the basket lighting 912. In operation S151 that corresponds to a case in which a user opens the door or stands in front of the refrigerator 1 for a long time, the external lightings, that is, the dispenser lighting 913 and the door lighting 911, may be turned off, and the basket lighting 912 inside the refrigerator 1 may be set to not turn off more quickly than the dispenser lighting 913 and the door lighting 911. Accordingly, the basket lighting 912 may be set to be turned off simultaneously with the dispenser lighting 913 and the door lighting 911, turned off later, or not turned off at all.

After operation S151, an operation S160 of determining whether the door is closed may be performed, and when the door is closed, an operation S170 of determining whether the basket lighting 912 is turned on may be performed. Thereafter, when the basket lighting 912 is turned on, the process proceeds to an end operation through an operation S171 of turning off the basket lighting 912, and when the basket lighting 912 is turned off, the process may proceed directly to the end operation.

Meanwhile, when the operation of the detection sensor is not continuously maintained within the preset time or the door is closed, an operation S180 may be performed. For example, this may correspond to a case in which a user approaches the refrigerator 1 and looks only inside, or knocks on the door and looks only inside. Operation S180 may include an operation S181 of simultaneously turning off the basket lighting 912, the dispenser lighting 913, and/or the door lighting 911, and an operation S182 of sequentially turning off the basket lighting 912 after the turning-off of the dispenser lighting 913 and/or the door lighting 911. Even in this case, the basket lighting 912 inside the refrigerator 1 may be set to be not turned off more quickly than the dispenser lighting 913 and the door lighting 911. Accordingly, the basket lighting 912 may be set to be turned off simultaneously with the dispenser lighting 913 and the door lighting 911 or turned off later. After operation S180 is performed, the process may proceed to the end operation.

Although the present invention has been described above with reference to exemplary drawings, the present invention is not limited by the embodiments and drawings disclosed in the specification, and it is apparent that various modifications can be made by those skilled in the art within the scope of the technical spirit of the present invention. In addition, even when the operational effects according to the configuration of the present invention have not been explicitly described in the description of the embodiments of the present invention, it goes without saying that the effects predictable by the corresponding configuration should be recognized.

## Claims

1. A refrigerator comprising:
a cabinet including one or more storage compartments;
a door configured to open and close the storage compartment; and
a basket assembly mounted on the door,
wherein the door includes a light source configured to emit light onto the basket assembly and one or more hanging parts configured to fix the basket assembly.

2. The refrigerator of claim 1, wherein the hanging parts are provided as a pair which are provided to protrude toward both side surfaces of the basket assembly and support lower portions of the both side surfaces of the basket assembly.

3. The refrigerator of claim 1, wherein the hanging parts are integrally formed with the door or detachably attached to the door.

4. The refrigerator of claim 1, wherein the door includes:
a main door having an opening therein and rotatably connected to the cabinet; and
a sub door rotatably connected to the main door to open and close the opening of the main door, and
the basket assembly is mounted on the main door.

5. The refrigerator of claim 4, wherein the main door includes a door liner including the opening and an outer plate surrounding at least one side surface of the door liner, and
the hanging parts are formed on inner side surfaces of the door liner.

6. The refrigerator of claim 5, wherein the hanging parts are integrally formed with the door liner and protrude from the inner side surfaces of the door liner toward the opening.

7. The refrigerator of claim 5, wherein an embedded portion is formed on the inner side surface of the door liner, and at least a portion of the hanging part is fixedly inserted into the embedded portion.

8. The refrigerator of claim 1, wherein the light source is mounted inside the hanging part, and the light source is disposed to emit light toward side surfaces of the basket assembly.

9. The refrigerator of claim 1, wherein a plurality of light sources are mounted inside the hanging part, and each of the light sources is disposed to emit light toward front, rear, and side surfaces of the basket assembly.

10. The refrigerator of claim 1, wherein an inner or outer surface of the hanging part, which does not overlap a light-emitting area of the light source, is light-shielded to block light emission.

11. The refrigerator of claim 1, wherein the basket assembly includes a seating portion recessed to be seated on the hanging part, and
the light source is disposed to horizontally overlap a lower surface of the basket assembly.

12. The refrigerator of claim 1, wherein the basket assembly includes:
a support member including a seating portion recessed to be seated on the hanging part; and
a basket part disposed on the support member and including a recess recessed to be seated on the seating portion, and
the light source is disposed to horizontally overlap the support member.

13. The refrigerator of claim 12, wherein the support member is a light guide member configured to guide light incident from the light source to a side edge of the support member.

14. The refrigerator of claim 12, wherein the support member includes a support body portion configured to support a lower surface of the basket part, and
light incident on the support member is totally reflected by upper and lower surfaces of the support body portion and diffusely reflected by side edges of the support body portion.

15. The refrigerator of claim 14, wherein the light incident on the support member is not emitted toward the upper and lower surfaces of the support body portion, but emitted along the side edges of the support body portion.
